# EUROPÄISCHE PATENTSCHRIFT

(11) **EP 1 927 804 B1**
(45) Veröffentlichungstag und Bekanntmachung des Hinweises auf die Patenterteilung: **02.01.2013**
(21) Anmeldenummer: 07075965.9
(22) Anmeldetag: 06.11.2007
(51) Int. Cl.: F16L 13/14

(54) **Rohrverbindung**
Pipe connection
Raccord de tuyauterie

(30) Priorität: 01.12.2006 DE 102006057721
(43) Veröffentlichungstag der Anmeldung: 04.06.2008
(73) Patentinhaber: Geberit International AG, 8645 Jona (CH)
(72) Erfinder: Sedlak, Bernd, 45478 Mülheim (DE); Simon, Udo, 45479 Mülheim (DE); Speckemeyer, Jens, 45475 Mülheim (DE)
(74) Vertreter: Meissner, Peter E.

(56) Entgegenhaltungen:
- WO-A-01/63160
- WO-A-2004/068018
- DE-C1- 10 118 956
- DE-C1- 10 164 568
- DE-C1- 19 840 668
- JP-A- 2004 108 448

## Beschreibung

Die Erfindung betrifft eine Rohrverbindung bestehend aus einem metallischen Pressfitting und einem Leitungsrohr sowie einem Dichtelement.

Eine Rohrverbindung des Standes der Technik ist bekannt (s. Prospekt Mannesmann Preßfitting GmbH, Ausgabe 811994). Die Dichtfunktion der Verbindung wird dadurch erreicht, dass durch plastische Verformung des wulstartig ausgebildeten Endes des Pressfittings mittels Pressbacken das Dichtelement elastisch verformt wird und über einen bestimmten Teil des Querschnittsumfanges linienförmig an den ihn umgebenden Oberflächenbereichen des wulstartig ausgebildeten Endes des Fittings und des Rohres zur Anlage kommt. Zur Aufnahme der bei entsprechendem Innendruck auftretenden Längskräfte wird der dem wulstförmig ausgebildeten Ende benachbarte zylindrische Bereich des Fittings zusammen mit dem Rohr plastisch verformt. Bei der Verpressung werden sowohl das wulstförmig ausgebildete Ende als auch der benachbarte zylindrische Bereich mittels der Pressbacken gleichzeitig verformt.

Im Regelfall führt bei der nach der Installation vorgeschriebenen Druckprobe eine nicht verpresste Verbindungsstelle zu einer feststellbaren Leckage. In Sonderfällen kann es aber vorkommen, dass die Toleranzpaarung von Rohr, Fitting und Dichtelement so ausfällt, dass das Dichtelement schon beim Einschieben des glattendigen Rohres eine, wenn auch nur geringe, Vorverformung erfährt, die aber ausreicht, um der Druckprobe bei der Abnahme der Installation standzuhalten.

Im späteren Betrieb atmet die Leitung, d. h. schnell schaltende Ventile führen zu Druckstößen, und es kann je nach Erwärmung zu Relativbewegungen kommen, so dass bei fehlender axialer Sicherung infolge der Nichtverpressung diese geringe Vorverformung des Dichtelementes nicht ausreicht, um die Dichtheit der Verbindungsstelle weiterhin zu gewährleisten.

Aus der Schrift DE 298 13 935 U1 ist eine Pressverbindung bekannt, bei der an der Innen - und/oder Außenkontur des Fittings bzw. des Metallrohrendes eine Stelle vorgesehen ist, die von der kreisförmigen Kontur abweicht, so dass eine Leckagestelle gebildet wird, wenn beim anschließenden Verpressen keine ausreichende Verformung in diesem Bereich stattgefunden hat.

Femer ist es aus der DE 197 22 935 C1 bekannt, dem Dichtelement eine von der Kreiskontur abweichende Form zu geben, um so eine Leckagestelle zu schaffen.

Um die Eigenschaft unverpresst undicht zu gewährleisten muss es dem Medium im unverpressten Zustand möglich sein, die Dichtung zu passieren. Dabei ist es unerheblich, ob der Leckagepfad zwischen Fitting und Dichtring oder zwischen Dichtring und Rohr verläuft.

Diese bekannten Pressverbindungen haben jedoch den Nachteil, dass sie nur bis zu relativ niedrigen Prüfdrücken, z. B. bis 6 bar den Zustand unverpresst undicht realisieren.

Allen bekannten Lösungen zum Thema "unverpresst undicht" ist eines gemein: Die Verbindungen sollen vor dem Verpressen undicht und nach dem Verpressen dicht sein. Diese beiden Funktionen sind bei allen bekannten Lösungen zeitlich jedoch nicht örtlich getrennt.

Das bedeutet, dass die Stelle die das Ausströmen des Mediums ermöglicht, zu einem späteren Zeitpunkt abgedichtet werden muss. Dadurch ergibt sich aus physikalischen Gründen das Dilemma, dass die zum Abdichten erforderlichen Kräfte an der Oberfläche des Dichtelementes ab einem bestimmten Grenzdruck immer auch durch das zu transportierende Medium aufgebracht werden.

Bei den zunehmend geforderten deutlich höheren Leitungsrohrdrücken von bis zu 16 bar führt dies dazu, dass der Dichtring der bekannten Pressverbindungen bei einem entsprechend hohen Prüfdruck soweit abdichtend gegen Fitting und Leitungsrohr gedrückt wird, dass die Verbindung, obwohl noch unverpresst, abgedichtet erscheint.

Weitere Beispiele für entsprechende Rohrverbindungen ergeben sich aus der DE 101 18 956 C1, der JP 2004 108448 A, der WO 01163160 A sowie der WO 20041068018A. Gemeinsam ist diesen allerdings, dass auch die dort beschriebenen Gestaltungsmöglichkeiten nicht die vorstehende Problematik lösen konnten.

Aufgabe der Erfindung ist es, eine Rohrverbindung des Standes der Technick anzugeben, mit der auch bei hohen Prüfdrücken von bis zu 16 bar eine nicht verpresste Stelle als undicht detektiert wird.

Diese Aufgabe wird mit den Merkmalen des Patentanspruches 1 gelöst. Vorteilhafte Weiterbildungen sind jeweils Gegenstand des Unteranspruchs.

Der große Vorteil einer stirnseitigen Anordnung der Ungänze ist darin zu sehen, dass es im Gegensatz zu bekannten Rohrverbindungen nun möglich ist, auch bei hohen Prüfdrücken, beispielsweise 16 bar, eine unverpresste Rohrverbindung zu detektieren.

Ein weiterer Vorteil ist darin zu sehen, dass Dichtelemente mit den erfindungsgemäßen Ungänzen im Vergleich zu bekannten Dichtelementen sehr einfach und kostengünstig herzustellen sind.

Andererseits kann auch auf einfache Weise der Ringwulst mit einer Ungänze, z. B. in Form einer Erhebung oder Vertiefung, versehen werden, wobei dann die Standard-Dichtelemente weiter verwendet werden können.

Es wird zunächst unterstellt, dass die Rohrverbindung im unverpressten und drucklosen Zustand undicht ist.

Bei der Druckprüfung bekannter Rohrverbindungen mit erhöhten Drücken wird diese durch die entstehende elastische Verformung des Dichtelementes auf der druckabgewandten Seite abgedichtet. Das Dichtelement wird dabei durch den aufgebrachten Prüfdruck stirnseitig in den Wulst hineingedrückt und dabei radial so weit verformt, dass das Dichtelement zwischen Rohr und Fitting abdichtend zur Anlage kommt.

Um die Funktion "unverpresst undicht" auch bei hohen Prüfdrücken aufrechterhalten zu können, werden deshalb bei der erfindungsgemäßen Rohrverbindung auf der (druckabgewandten) Stirnseite des Dichtelementes Ungänzen in Form von Leckagepfaden eingebracht.

Wichtig bei der Gestaltung der Ungänze am Dichtelement ist, dass diese entweder groß genug ausgebildet ist, um auch noch bei hohen Prüfdrücken einen Leckagepfad auf der druckabgewandten Stirnseite des Dichtelementes zu bilden oder der Bereich der Ungänze so ausgesteift ist, dass ein Verschließen des Leckagepfades bei hohen Prüfdrücken verhindert wird. Als Aussteifung können z. B. entsprechend gestaltete Ungänzen oder im Extremfall bei sehr hohen Prüfdrücken ein in das Dichtelement eingesetztes Metallprofil dienen.

Bei der Ausgestaltung des Dichtelementes bzw. der Ungänze ist es unerheblich, ob die Ungänze nach Verpressung der Rohrverbindung verschlossen ist oder nicht.

Die Abdichtung der Rohrverbindung wird beim Verpressen auf jeden Fall dadurch erreicht, dass das Dichtelement durch die plastische Verformung des Ringwulstes auf der druckzugewandten Seite abdichtend am Leitungsrohr und Fitting zur Anlage kommt.

Als stirnseitige Ungänzen des Dichtelementes kommen z. B. Kerben oder Nuten in Betracht, die in Anzahl oder Größe den jeweiligen Erfordernissen bei der Leckageprüfung angepasst werden können.

Für den Fall, dass die Ungänzen am stirnseitigen Bereich des Ringwulstes angeordnet sein sollen, können diese ebenfalls, z. B. als Nuten, Kerben oder auch Materialanhäufungen, ausgebildet sein, wobei diese Ungänzen vorteilhaft direkt bei der Herstellung des Fittings in den Ringwulst eingebracht werden können.

Der Vorteil der vorgeschlagenen Rohrverbindung ist darin zu sehen, dass am Grunddesign der einzelnen Elemente nichts geändert werden muss und auch die im Markt in großer Stückzahl sich befindenden Presswerkzeuge unverändert eingesetzt werden können. Einzige Bedingung ist eine Systemkonformität für die drei zusammenwirkenden Elemente Pressfitting, Dichtelement und Leitungsrohr, da bei einer Mischung mit Elementen aus anderen Systemen die vorteilhafte Spaltbildung nicht gewährleistet ist.

In einer weiteren vorteilhaften Ausgestaltung der Rohrverbindung ist das Dichtelement so ausgebildet, dass der Wulstbereich im Wesentlichen vom Dichtelement ausgefüllt wird. Im Vergleich zu den bekannten kreisringförmigen Dichtelementen wird durch die axiale Verlängerung bis zum Beginn des der Einschubseite abgewandten zylindrischen Bereiches vorteilhaft der Wulstbereich nach der Verpressung hermetisch verschlossen. Dadurch gelangt das zu transportierende Medium nicht mehr in die ansonsten verbliebenen Hohlräume des Wulstbereiches.

Weil diese Bereiche der Rohrleitung während des Betriebes nur unzureichend durchspült werden, wirkt sich dieser Verschluss beispielsweise bei Stoffen, die sich im zu transportierenden Leitungswasser befindenden können und Einfluss auf die hygienischen Verhältnisse oder die Korrosion der Verbindung haben könnten, vorteilhaft aus.

Weitere Merkmale, Vorteile und Einzelheiten der Erfindung ergeben sich aus der nachfolgenden Beschreibung von in einer Zeichnung dargestellten Ausführungsbeispielen.
Es zeigen:
- **Figur 1a**: im halbseitigen Längsschnitt eine erfindungsgemäße Rohrverbindung im montierten Zustand vor der Verpressung mit einem einen Leckagepfad bildenden Dichtelement,
- **Figur 1b**: wie Fig. 1a, jedoch im Zustand der Druckprüfung,
- **Figur 2**: wie Fig. 1a, aber nach der Verpressung,
- **Figur 3**: wie Fig. 1a, aber mit einem anderen Dichtelement,
- **Figur 4a**: wie Fig. 1a, aber mit einer einen Leckagepfad bildenden Ungänze am Ringwulst,
- **Figur 4b**: wie Fig. 4a, aber mit einer alternativen Ausgestaltung der Ungänze.

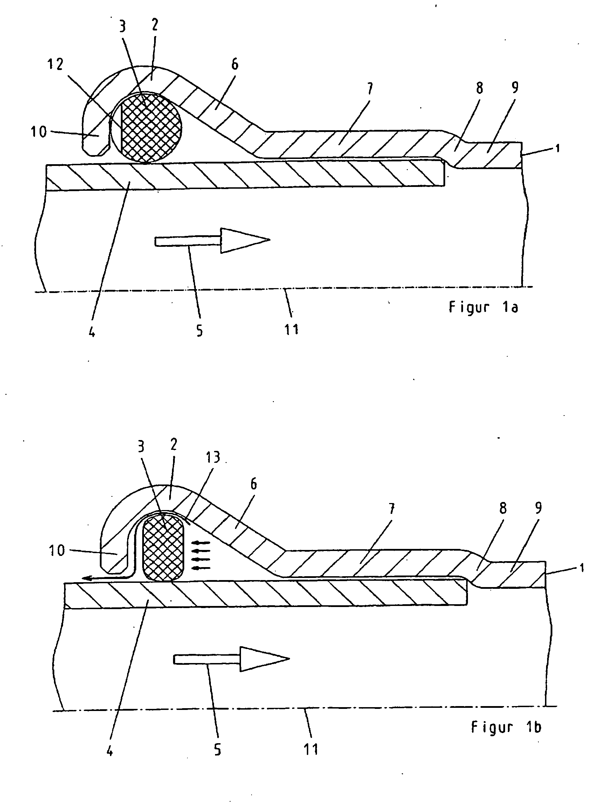

**Figur 1a** zeigt in einem Längsschnitt eine erfindungsgemäß ausgebildete Rohrverbindung im montierten Zustand vor der Verpressung, besteht aus einem Pressfitting 1, dessen stirnseitiges Ende einen Ringwulst 2 mit einem darin eingelegten Dichtelement 3 aufweist. Üblicherweise ist das Dichtelement 3 als Rundschnurring ausgebildet.

In den Pressfitting 1 ist ein glattendiges Leitungsrohr 4 eingeschoben, dessen Einschubrichtung 5 durch einen Pfeil gekennzeichnet ist. In Einschubrichtung 5 gesehen schließt sich an den Ringwulst 2 mit einem schrägen Übergang 6 ein zylindrisch ausgebildeter Abschnitt 7 an. Dieser geht mit einem Absatz 8 über in einen zweiten zylindrisch ausgebildeten Abschnitt 9, dessen Innendurchmesser geringer ist als der Innendurchmesser des ersten zylindrischen Abschnittes 7.

Am Absatz 8 kommt das eingeschobene Leitungsrohr 4 zur Anlage. Entgegengesetzt zur Einschubrichtung 5 geht in diesem Ausführungsbeispiel der Ringwulst 2 über in einen stirnseitigen Bereich 10, dessen Schenkel nahezu senkrecht zur Achse 11 des Leitungsrohres 4 liegt.

Erfindungsgemäß weist das Dichtelement 3 einschubseitig an der Kontaktfläche zum stirnseitigen Bereich 10 eine Ungänze 12 auf, die im unverpressten Zustand bei der Druckprüfung der Rohrverbindung eine Leckagestelle für das Prüfmedium bildet.

Die unverpresste Rohrverbindung im Zustand der Druckprüfung zeigt **Figur 1b**, wobei für gleiche Teile gleiche Bezugszeichen verwendet werden. Deutlich zu erkennen ist an der durch Pfeile dargestellten Fließrichtung des Druckmediums, dass die stirnseitige Ungänze 12 auch dann noch einen Leckpfad 13 bildet, wenn bedingt durch einen sehr hohen Prüfdruck, z. B. 15 bar, sich das Dichtelement durch die elastische Verformung schon abdichtend an das Leitungsrohr 1 und den Ringwulst 2 anlegt.

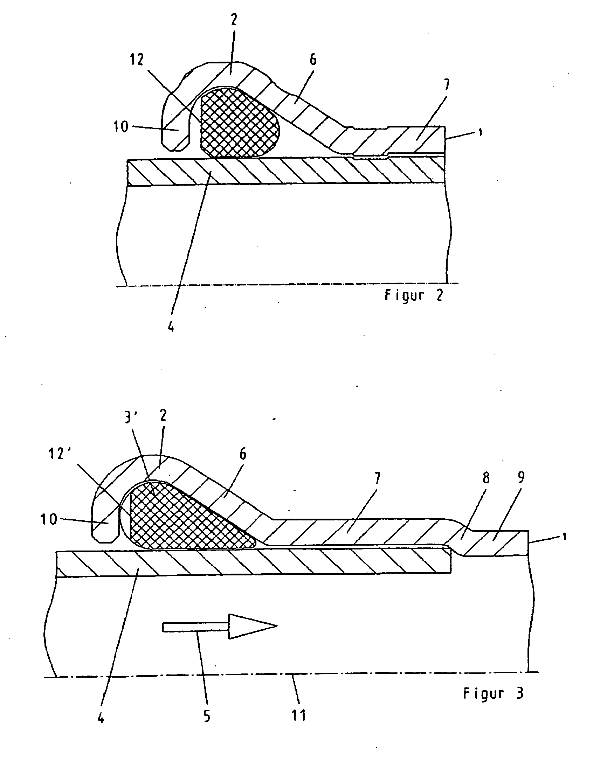

**Figur 2** zeigt eine Rohrverbindung entsprechend **Figur 1a** aber nach der Verpressung. Für gleiche Teile sind gleiche Bezugszeichen verwendet worden. Deutlich zu erkennen ist, dass, obwohl die eine Leckage bildende Ungänze 12 noch deutlich ausgeprägt ist, durch die elastische Verformung des Dichtelementes 3 bei der Verpressung sich dieses am schrägen Übergang 6 des Ringwulstes 2 und dem Leitungsrohr 1 abdichtend anlegt und so eine axial gesicherte und abgedichtete Verbindung ergibt.

**Figur 3** zeigt in einem gleichen Längsschnitt wie **Figur 1** eine zweite Ausführungsform eines Pressfittings 1 mit einem anderen Dichtelement 3', wobei für gleiche Teile gleiche Bezugszeichen verwendet worden sind. Bei dieser Ausführungsform wird der Ringwulst 2 annähernd vollständig von dem Dichtelement 3' ausgefüllt, um aus hygienischen und korrosionstechnischen Gründen den nur unzureichend im Betrieb der Leitung durchspülbaren Wulstbereich gegen Eindringen des zu transportierenden Mediums abzuschotten.

Die Ungänze 12' bewirkt auch bei dieser Ausführungsform wie zu **Figur 1b** beschrieben, eine Zwangsleckage der Rohrverbindung auch bei hohem Prüfdruck.

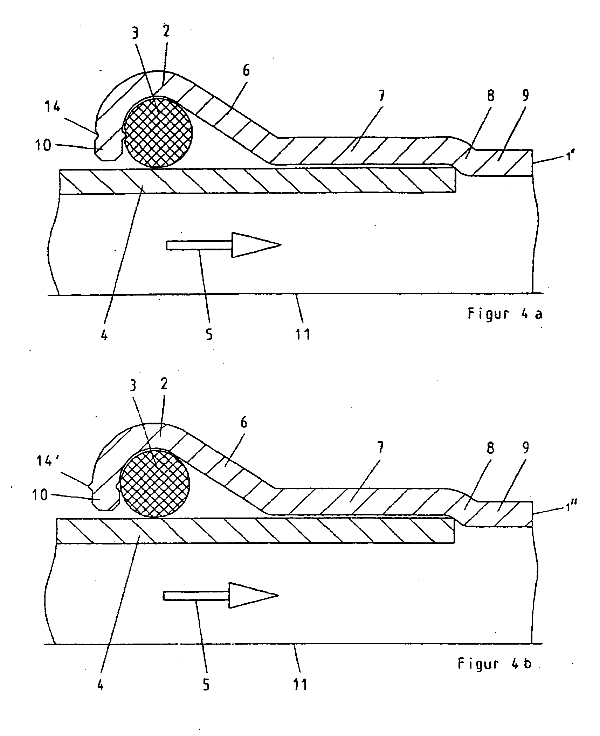

In **Figur 4a** ist eine alternative Rohrverbindung dargestellt, bei der der Leckagepfad im montierten, aber unverpressten Zustand durch eine Ungänze im Ringwulst realisiert wird. Für gleiche Teile wurden gleiche Bezugszeichen verwendet.

Vorteilhaft weist der dem Dichtelement 3 zugewandte stirnseitige Bereich 10 des Ringwulstes 2 eine Ungänze 14 in Form einer Auswölbung auf, die auch bei hohen Prüfdrücken eine sichere Leckagestelle bildet.

Nach der Verpressung der Rohrverbindung ist es unerheblich, ob die Ungänze 14 vom Dichtelement 3 verschlossen wird oder nicht, da, wie bereits zur **Figur 2** beschrieben, die Abdichtung der Rohrverbindung zwischen dem schrägen Übergang 6 des Fittings 1 und dem Leitungsrohr 4 erfolgt.

**Figur 4b** zeigt eine alternative Ausgestaltung der Ungänze im Ringwulst von **Figur 4a**. Anstatt einer Auswölbung wird in diesem Falle die Leckagestelle über eine in den Ringwulst 2 eingebrachte Kerbe 14' realisiert, die in einfacher Weise wie die als Auswölbung ausgebildete Ungänze 14 in **Figur 4a** bei der Herstellung des Fittings 1, 1" in den Ringwulst 2 eingeformt werden kann.

### Bezugszeichenliste

| **Nr.** | **Bezeichnung** |
|---|---|
| 1, 1', 1" | Pressfitting |
| 2 | Ringwulst |
| 3, 3' | Dichtelement |
| 4 | Leitungsrohr |
| 5 | Einschubrichtung |
| 6 | schräger Übergang |
| 7 | erster zylindrisch ausgebildeter Abschnitt |
| 8 | Absatz |
| 9 | zweiter zylindrisch ausgebildeter Abschnitt |
| 10 | stirnseitiger Bereich der Ringwulst |
| 11 | Achse Leitungsrohr |
| 12, 12' | Ungänze Dichtelement |
| 13 | Leckagepfad |
| 14, 14' | Ungänze Ringwulst |

## Patentansprüche

1. Rohrverbindung, bestehend aus einem metallischen Pressfitting (1, 1', 1"), der mindestens einen im Querschnitt wulstartig ausgebildeten, ein Dichtelement (3) aufnehmenden Abschnitt (2) und einen sich daran anschließenden der Einschubseite zugewandten und/oder der Einschubseite abgewandten zylindrisch ausgebildeten Abschnitt (7) aufweist, und mittels eines den Pressfitting (1, 1', 1") umfassenden, mindestens zwei Pressbacken aufweisenden Presswerkzeuges nach dem Schließen des Presswerkzeuges eine unlösbare dichte Rohrverbindung gebildet wird, wobei während des Verpressens die Pressbacken auf den Ringwulst (2) einschließlich des darin eingelegten Dichtelementes (3, 3') einwirken,
wobei im montierten, aber nicht verpressten Zustand die dem stirnseitigen Bereich (10) des ringwulstartigen Abschnittes (2) zugewandte, druckabgewandte Fläche des Dichtelementes (3, 3') mit mindestens einer einen Durchtritt des zu fördernden Mediums erlaubenden Ungänze (12, 12', 14) versehen ist und das Dichtelement (3,3') in Bezug auf die Ungänze an dem Dichtelement oder am ringwulstartigen Abschnitt derart in der Größe der Ungänze oder Steifigkeit des Dichtelementes ausgebildet ist, dass auch bei Prüfdrucken bis zu 16 bar die Ungänze nicht durch die Verformung des Dichtelementes in Folge des Prüfdruckes abgedichtet wird, sondern erst durch die beim Verpressen auftretende plastische Verformung des Ringwulstes (2) und die elastische Verformung des Dichtelementes bei der Verpressung sich das Dichtelement (3,3') am schrägen Übergang (6) des Ringwulstes (2) und dem eingeschobenen Leitungsrohr (1) abdichtend anlegt,
wobei ausschließlich der druckabgewandte stirnseitige Bereich des Dichtelementes (3,3') mit einer ein Verschließen der Ungänze (12,12'14) bei honen Prüfdrucken verhindernden Aussteifung versehen ist.

2. Rohrverbindung nach Anspruch 1
**dadurch gekennzeichnet,**
**dass** zusätzlich der dem Dichtelement (3,3') zugewandte stirnseitige Bereich (10) des wulstartigen Abschnittes (2) mit einer Ungänze (14,14') versehen ist.

## Claims

1. Pipe connection, comprising a metal press fitting (1, 1', 1") which has a portion (2), shaped in the manner of a bead in cross-section and accommodating a sealing element (3), and a cylindrically shaped portion (7), adjoining the portion (2) and facing the push-in side and/or facing away from the push-in side, and a permanent tight pipe connection is formed by means of a pressing tool, encompassing the press fitting (1, 1', 1") and having at least two pressing jaws, after the closure of the pressing tool, the pressing jaws acting on the annular bead (2), including the sealing element (3, 3') inserted therein, during the compression,
wherein the surface of the sealing element (3, 3') facing the front-side region (10) of the annular-bead-like portion (2) and facing away from the pressure is provided, in the mounted but not compressed condition, with at least one discontinuity (12, 12', 14) allowing a passage of the medium which is to be conveyed, and the sealing element (3, 3') is designed, with respect to the discontinuity on the sealing element or on the annular-bead-like portion, in such a manner as regards the size of the discontinuity or stiffness of the sealing element that even at test pressures of up to 16 bar the discontinuity is not sealed by the deformation of the sealing element owing to the test pressure, but rather the sealing element (3, 3') bears sealingly against the oblique transition (6) of the annular bead (2) and the pushed-in conduit pipe (1) only as a result of the plastic deformation of the annular bead (2) occurring on compression and the elastic deformation of the sealing element on compression,
wherein exclusively the front-side region of the sealing element (3, 3') facing away from the pressure is provided with a stiffening preventing closure of the discontinuity (12, 12', 14) at high test pressures.

2. Pipe connection according to Claim 1,
**characterised in that**, in addition, the front-side region (10) of the bead-like portion (2) facing the sealing element (3, 3') is provided with a discontinuity (14, 14').

## Revendications

1. Raccord de tuyauterie constitué d'un joint d'ajustement métallique serré (1, 1', 1"), qui présente au moins une section (2) conformée en bourrelet en coupe transversale et recevant un élément d'étanchéité (3) et une section (7) qui s'y rattache, tournée vers le côté d'insertion, et/ou conformée en cylindre du côté opposé au côté d'insertion, et, au moyen d'un outil de compression enserrant le joint d'ajustement serré (1, 1', 1") et présentant au moins deux mors de compression, après fermeture de l'outil de compression, un raccord de tuyauterie étanche indétachable est formé, dans lequel, au cours de la compression, les mors de compression agissent sur le bourrelet annulaire (2), y compris sur l'élément d'étanchéité (3, 3') qui y est inséré,
dans lequel, à l'état monté, mais non comprimé, la surface de l'élément d'étanchéité (3, 3') opposée à la pression et tournée vers la zone frontale (10) de la section (2) en forme de bourrelet annulaire est pourvue d'au moins une imperfection (12, 12', 14) permettant un passage du milieu à acheminer et l'élément d'étanchéité (3, 3') est conformé par rapport à l'imperfection sur l'élément d'étanchéité ou sur la section en forme de bourrelet annulaire à la grandeur de l'imperfection ou à la rigidité de l'élément d'étanchéité de sorte que, même à des pressions d'essai allant jusqu'à 16 bars, l'imperfection ne soit pas étanchée par la déformation de l'élément d'étanchéité à la suite de la compression d'essai, mais que l'élément d'étanchéité (3, 3') soit étanché sur la transition inclinée (6) du bourrelet annulaire (2) et du tuyau conducteur (1) seulement par la déformation plastique du bourrelet annulaire (2) se produisant lors de la compression et par la déformation élastique de l'élément d'étanchéité lors de la compression.

2. Raccord de tuyau selon la revendication 1,
**caractérisé en ce que** la zone frontale (10) - tournée vers l'élément d'étanchéité (3, 3') - de la section (2) en forme de bourrelet est pourvue d'une imperfection (14, 14').
